# EUROPEAN PATENT SPECIFICATION

(11) **EP 3 277 548 B1**
(45) Date of publication and mention of the grant of the patent: **02.10.2019**
(21) Application number: 16723518.3
(22) Date of filing: 01.04.2016
(51) Int. Cl.: B60S 3/04

(54) **APPARATUS, SYSTEM AND METHOD FOR THE REMOVAL OF SNOW AND/OR ICE FROM A VEHICLE**
VORRICHTUNG, SYSTEM UND VERFAHREN ZUR BESEITIGUNG VON SCHNEE UND/ODER EIS VON EINEM FAHRZEUG
APPAREIL, SYSTÈME ET PROCÉDÉ POUR RETIRER LA NEIGE ET/OU LA GLACE À PARTIR D'UN VÉHICULE

(30) Priority: 01.04.2015 IT VI20150090; 01.04.2015 IT VI20150091
(43) Date of publication of application: 07.02.2018
(73) Proprietor: Airoxmig S.R.L., 39100 Bolzano (BZ) (IT)
(72) Inventor: MAYER, Erardo Mateo, 20900 Monza (MB) (IT); MICHELETTI, Giorgio, 37015 Sant'ambrogio Di Valpolicella (VR) (IT)
(74) Representative: Autuori, Angelo
(86) International application number: PCT/IB2016/051868
(87) International publication number: WO 2016/157139

(56) References cited:
- EP-A1- 2 923 902
- CA-A1- 2 037 537
- CA-A1- 2 576 692
- DE-U1-202013 005 941
- US-A1- 2010 059 089
- US-A1- 2012 152 291
- US-A1- 2015 013 097

## Description

### Field of Application

The present invention is generally applicable to the field of plant, and it particularly relates to an apparatus for to removal of snow and / or ice from vehicles, in particular trucks, buses or the like, as well as a system that includes such an apparatus.

Furthermore, the invention relates to a method for the removal of snow and / or ice from the above mentioned vehicles.

### Background of the invention

It is known that during winter after a snowfall snow accumulates on the surfaces of vehicles, in particular on the portions having a horizontal surface, such as the roof. In particular, according to the external conditions, generally a sheet of compacted snow and / or ice is formed on the outer surface of the vehicle. Moreover, generally, fresh snow accumulates above such a sheet.

Such a phenomenon is a drawback if part of the snow and / or ice lain on the surface of the vehicle falls during the movement thereof on the pavement or, worse, on other vehicles.

This is even more evident in the case of trucks, buses or special vehicles for the transport of goods or the like, since the amount of snow accumulated on the roof is greater.

To overcome such a drawback, systems for the removal of snow from such vehicles are known essentially consisting of one or more portal frames with fixed blades under which the vehicle thereof passes. The snow accumulated on the vehicle impacts against the blade and falls to the sides thereof.

Such a solution has some recognized drawbacks.

In fact, the blades do not adapt to the different heights of the vehicles, removing only partially the snow and leaving a layer of snow and / or ice on the surface of the vehicle. It is evident that such a layer may fractionate during the movement of the vehicle, becoming a danger for other vehicles.

Moreover, the blades often come in contact with the outer surface of the vehicle by irreparably damaging it, in particular in case of tarpaulin trucks.

Still, such a solution has a low removal efficacy.

DE 20 2013 005941 U1 discloses an apparatus for the removal of ice and/or compacted snow from the outer surface of a vehicle according to the preamble of claim 1.

### Summary of the invention

Object of the present invention is to at least partially overcome the above mentioned drawbacks by providing an apparatus for the removal of snow and / or ice from vehicles of high efficacy and relative cost.

Another object of the invention is to provide an apparatus for the removal of snow and / or ice from vehicles that allows the safe movement of the vehicle.

Another object of the invention is to provide an apparatus for the removal of snow and / or ice from vehicles that does not damage the vehicles thereof.

Another object of the invention is to provide an apparatus that allows the substantially total removal of snow and / or ice from vehicles.

Such objects, as well as others which will appear more evident hereinafter are fulfilled by an apparatus and / or a system and / or a method having one or more of the features herein described and / or shown and / or claimed.

Advantageous embodiments of the invention are described according to the appended claims.

### Brief description of the drawings

Further features and advantages of the present invention will appear more evident by reading the detailed description of a preferred but not exclusive embodiment of an apparatus for the removal of an ice and / or compacted snow sheet, shown as way of not limitative example with the help of the annexed drawings, wherein:
**FIG. 1** is a side view of a first embodiment of the system for the removal of an ice and / or compacted snow sheet **1;**
**FIG. 2** is a top view of the system **1;**
la **FIG. 3** is a partial front view of some details of the apparatus **2** for the fractionation of the ice and / or compacted snow sheet by means of a fluid at high pressure **W;**
**FIG. 4** is a partial front view of some details of the apparatus **3** for the removal of ice and / or snow by means of a flow of air;
FIG. **5** is a partial front view of some details of the apparatus **4** for the removal of the snow accumulated on a vehicle **V;**
**FIG. 6** is a schematic view of a further embodiment of the system **1;**
**FIG. 7** is a schematic top view of some details of the embodiment of the system **1** of FIG. 6.

### Detailed description of some preferred embodiments

With reference to the above mentioned figures, it is described a system **1** for the removal of an ice and / or compacted snow sheet **L** from the outer surface **S** of a vehicle **V,** for example a truck.

The system **1** may include an apparatus **2** for the fractionation of the sheet **L** of snow and / or ice by means of the spray of one or more jets of a working liquid **W,** for example water, at a working pressure of at least 150 bar and a possible apparatus **3** for the removal of the parts **P** of snow and / or ice of the sheet **L** previously cut by means of a flow of air.

Suitably, the working pressure may be of 150 bars to 250 bars, and preferably of 200 bar to 250 bar, so as to obtain an effective fractionation of the sheet **L** without damaging the vehicles **V** having semirigid or flexible outer surfaces **S,** for example tarpaulin trucks.

On the other hand, the working pressure may be of 150 bar to 500 bar, preferably of 200 bar to 500 bar, more preferably of 250 bar to 500 bar and even more preferably of 300 bar to 500 bar so as to obtain an effective fractionation of the sheet **L** without damaging vehicles **V** having rigid metal outer surfaces **S,** for example trucks with metal body or container.

In a preferred but not exclusive embodiment of the system **1,** a further apparatus **4** may be provided for the removal of any accumulation **A** of fresh snow on the sheet **L,** whose functioning is better explained in what follows.

The present invention includes various parts and / or elements that are similar or identical. Unless otherwise specified, similar or identical parts and / or elements are indicated with a single reference number, meaning that the described technical features are the same for all similar or identical parts and / or elements.

The system **1** may be installed in a processing area **5** susceptible to be occupied by the vehicle **V** to be worked. To the object, the processing area **5** may consist of, for example, a cement or asphalt area, and it may be connected to a road to allow the access of the vehicle **V** in the processing area **5** and the exit therefrom.

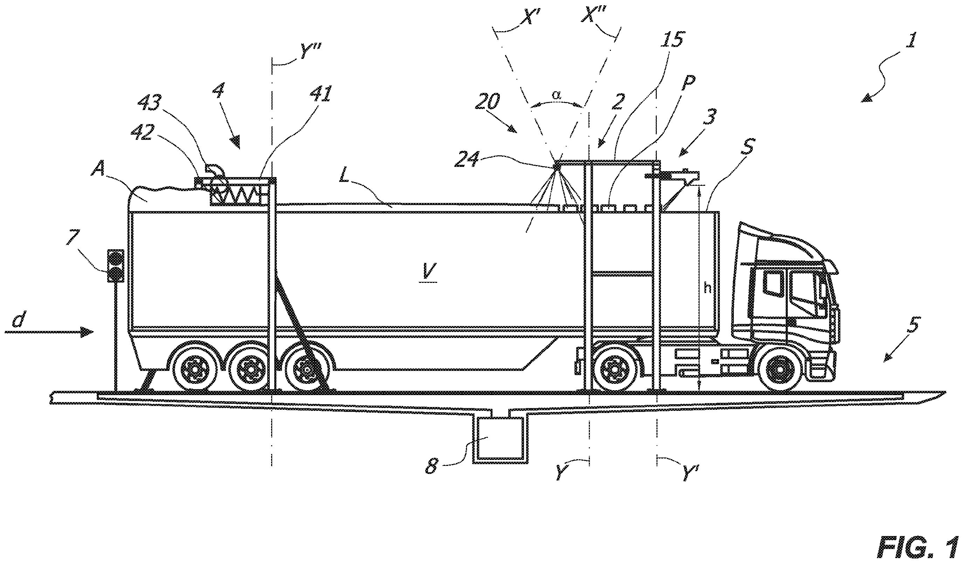

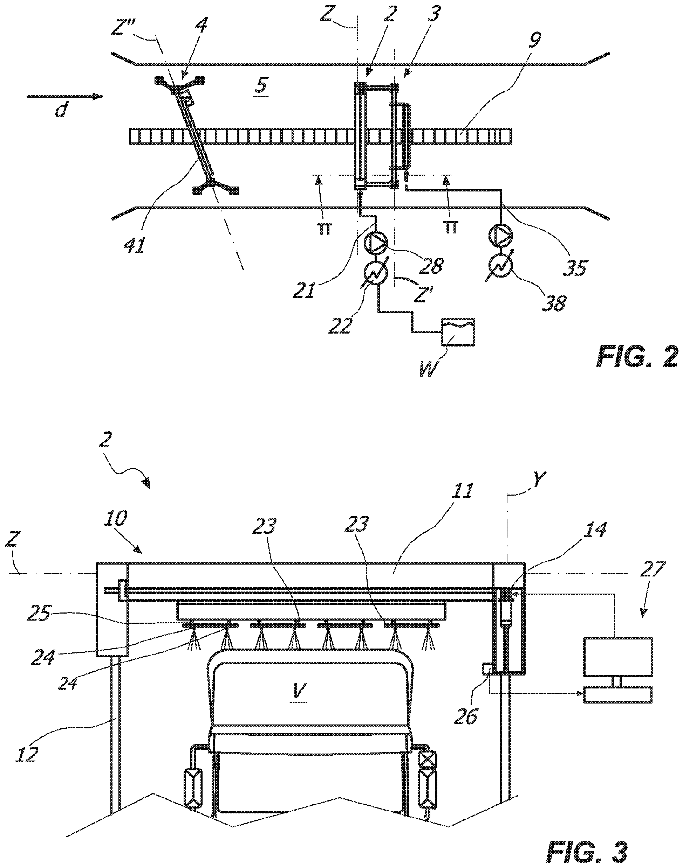

The apparatus **2** may comprise at least one first portal structure **10** overlying the processing area **5,** that may define an advancement direction **d** relative between the portal structure **10** and the vehicle **V** to be worked, as shown in FIGs. 1 and 2.

The first portal structure **10** may have a size such as to allow the passage of the vehicle **V** below it without making the latter coming in contact with the first portal structure **10.**

In particular, the latter may comprise an upper portion **11,** for example a crossbeam defining an axis **Z** substantially parallel to the processing area **5** and a pair of vertical portions **12,** for example culumns arranged orthogonally with respect to the processing area **5** and defining axis **Y.**

It is understood that although in the present description portal structures as the above mentioned are described, the portal structure according to the invention may equivalently consist of a single column whereon the crossbeam is cantilevered mounted, or of a single monolithic curved column that extends from the processing area **5.**

Therefore, the upper portion **11** may have a distance from the processing area **5,** that is, a minimum height **h,** sufficient to allow the passage of the vehicle **V** to be worked below it without the latter coming in contact with the outer surface of the vehicle **V** thereof.

In order to remove the ice and / or compacted snow sheet **L** from the upper surface **S** of the vehicle **V** to be worked, the portal structure **10** may comprise a plurality of nozzles **20** at high pressure directed so as to spray the water **W** at pressure towards the processing area **5,** and therefore towards the sheet **L.**

Therefore, the nozzles **20** may be nozzles at high pressure for water, of a *per se* known type. In a preferred but not exclusive embodiment, the nozzles may be manufactured in accordance with the teachings of the Italian Application VI2014A000047.

To allow the inflow of water in the nozzles **20,** a water feed line **21** may further be provided to the nozzles **20** to allow the spray of the water thereof. In particular, the feed line may include a water source **W,** for example a water network or a tank, and a pump **28** at high pressure, that may be of a *per se* known type.

According to an aspect of the invention, the feed line **21** may comprise preheating means **22,** for example a heat exchanger or a gas burner, arranged along the line **21** thereof placed upstream with respect to the nozzles **20** to preheat the water **W** so as the flow flowing out from the nozzles **20** has greater efficacy in the fractionation of the ice and / or compacted snow sheet **L.**

Suitably, one or more manifolds **23** may be provided, arranged along the fluid line **21,** operatively connected to the nozzles **20.** In particular, the manifolds **23** may be placed on the upper portion **11** of the portal structure **10** so as the nozzles **20** spray the water **W** at pressure from the top towards the processing area **5.**

In this way, when the processing area **5** is occupied by the vehicle **V** to be worked, the nozzles **20** are directed so as to spray the water **W** towards the upper surface **S** of the vehicle **V,** that is, towards the ice and / or compact snow sheet **L.**

The nozzles **20** hit the sheet **L** with possibly hot water **W** at pressure, for example around 35 - 50 °C, so as to fractionate the same sheet forming a plurality of parts **P.**

According to another aspect of the invention, the nozzles **20** may be connected therebetween two by two so as to form pairs of nozzles **24,** arranged in sequence along the axis **Z** and adjacent to each other.

The nozzles **20** of the pair of nozzles **24** may release respective jets defining a respective second and third axis **X', X",** that may lie on a plane **π** substantially perpendicular to the axis **Z.** In particular, the axis **X', X"** may be reciprocally inclined at an angle **α** of 5° to 60°, preferably of 10° to 45° and more preferably of about 25°.

The manifolds **23** may be mounted slidably movable along the first axis **Z,** for example along guides **25.** Suitable moving means, linear actuators or a connecting rod-crank mechanism fitted directly on a hydraulic or electric motor may further be provided.

Therefore, during the processing, the manifolds **23** may slide along the upper portion **11.** In this way, the nozzles **20** may slide along the axis **Z** so as to spray on the entire width of the ice and / or compacted snow sheet **L** placed on the upper surface **S** of the vehicle **V** transversely with respect to the advancement direction **d.**

Such a feature allows to obtain a greater efficacy of rupture and fractionation of the sheet **L** thereof.

According to a further aspect of the invention, each manifold **23** may include more pairs of nozzles **24.** Moreover, the manifolds **23** may be mounted integrally therebetween so as to integrally slide therebetween along the upper portion **11.**

In a further embodiment, the manifolds **23** may be rotatably mounted on the upper portion **11.** In this way, the nozzles **20** may rotate with respect to the latter.

It is understood that the rotation of the nozzles **20** may be partial or total. In other words, each nozzle **20** may rotate by an angle of 5° to 360°.

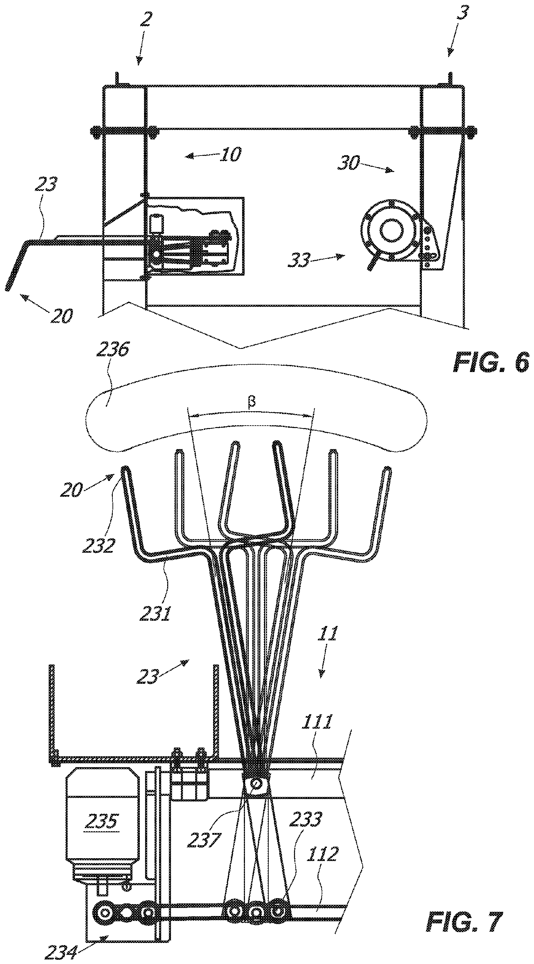

For example, in the embodiment shown in FIGs. 6 and 7 the manifolds **23** may include one or more branches **231** pivoted on a crossbeam **111** of the upper portion **11** of the portal structure **10.** Each branch **231** has one end **232** that includes one or more nozzles **20** and one end **233** connected to a connecting rod-crank mechanism **234,** in its turn driven by a motor **235.**

Therefore, each branch **231** has an oscillating angular movement of amplitude **β** around the pivoting point **237.**

In this way, each nozzle **20** describes a generally elliptical path **236,** so as to maximize the efficacy of the spray and, therefore, the fragmentation of the sheet **L.**

Advantageously, each of the manifolds **23** may be connected to a different feed line **21** of the water **W.**

Thanks to such a feature, a high pressure of the water **W** flowing out from the nozzles **20** is obtained, thus further improving the efficacy of the fractionation of the ice and / or compacted snow sheet **L.**

Suitably, the nozzles **20** may be arranged so as to have a predetermined distance from the surface **S** of the vehicle **V.** Such a feature, besides improving the efficacy of the jet flowing out from the nozzles **20** thereof allows to prevent the contact between the nozzles **20** and the surface **S** of the vehicle **V** thus avoiding the risk of damaging the one or the other.

Furthermore, the apparatus **2** may comprise first motor means **14** acting upon the first portal structure **10.** In particular, the latter may move the upper portion **11** of the portal structure **10** along the axis **Y** so as to determine the minimum height **h** of the latter from the processing area **5** and, therefore, during the processing, the distance of the nozzles **20** from the vehicle **V.**

The motor means **14** may be activated by an operator, for example via a PLC, that manually adapts the minimum height **h** of the crossbeam **11** of the portal structure **10** according to the height of the vehicle.

Moreover, audible or visual warning means **7** may be provided, for example a light indicator, that may also be activated manually by the operator to signal to the driver of the vehicle **V** to move forward along the processing area **5.**

Advantageously, to facilitate the positioning of the vehicle **V** along the advancement line **d,** guiding means may be provided, for example side guiding bands.

Thanks to such a feature, the positioning of the vehicle **V** in the optimum position inside the processing area **5** is extremely facilitated.

On the other hand, the motor means **14** may be automatically activated. To the object, first sensor means **26** may be provided to detect the position and / or the height of the vehicle **V** when the latter is in the processing area **5.**

Moreover, the audible or visual warning means **7,** may be operatively connected to the first sensor means **26.**

Suitably, at least one first logic data processing unit **27** may be provided operatively connected to the motor means **14** to automatically control the action of the latter in response to a signal of the sensor means **26** so as to automatically move the upper portion **11** of the first portal structure **10.**

In this way, the upper portion **11** of the first portal structure **10** may automatically adapt to the different heights of the vehicles allowing to avoid the impact between the vehicle **V** and the upper portion **11,** and, therefore, between the vehicle **V** and the nozzles **20.**

According to a further aspect of the invention, the apparatus **1** may comprise a system of recovery and recycling of the water **W.** In particular, a tank **8** may be provided to collect the water **W** from the processing area **5** fluidly connected to the feed means of the working liquid **W.**

Advantageously, it is then possible to recover at least partially the water **W** flowing out from the nozzles **20** with a considerable reduction of the water consumption **W** thereof.

Furthermore, the processing area **5** may have a collecting channel **9** of the working liquid **W,** that may be protected for example by a grill, fluidly connected to the collecting tank **5** thereof.

Furthermore, according to a further aspect of the invention, the processing area **5** may have a predetermined slope so as to promote the flow of the water **W** towards the collecting channel **9.**

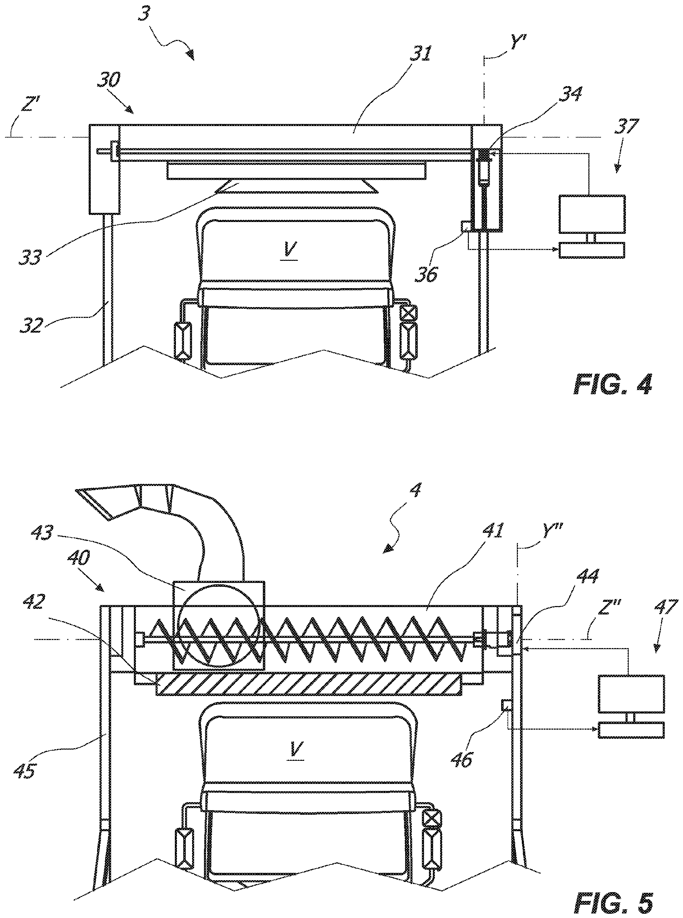

According to another aspect of the invention, the apparatus **3** for the removal of the parts **P** of snow and / or ice by means of a flow of air may comprise a second portal structure **30,** as shown in FIG. **4****,** overlying the processing area **5** and arranged substantially parallel to the first portal structure **10.**

The second portal structure **30** may have a configuration similar to the first portal structure **10,** in particular it may have a second upper portion **31,** for example a crossbeam, substantially parallel to the first upper portion **11,** placed along an axis **Z'** substantially parallel to the axis **Z.** A pair of substantially vertical columns **32** may further be provided.

The second portal structure **30** may be movable, in particular the second upper portion **31** may slide along an axis **Y'** substantially parallel to the axis **Y,** to vary the height between the upper portion **31** thereof and the processing area **5.** Advantageously, in this way, also the second upper portion **31** may adapt to the different heights of different types of vehicles **V.**

To the object, second sensor means **36** to detect the position and / or the height of the vehicle **V** and second motor means **34** acting upon the upper portion **31** to move thereof may be provided.

Suitably, a second logic data processing unit **37** may be provided operatively connected to the second sensor means **36** and to the second motor means **34.** The latter may automatically control the action of the motor means **34** in response to a signal of the sensor means **36.**

Thanks to such a feature, the second upper portion **31** of the second portal structure **30** may automatically vary the minimum height **h** to adapt to different types of vehicle **V.**

According to another aspect of the invention, the first and the second logic data processing unit **27, 37** may be reciprocally operatively connected in order to cooperate, so as the variation in height of the first portal structure **10** corresponds to a variation in height of the second portal structure **30** and vice versa. On the other hand, a single logic data processing unit may be provided that controls both apparatuses **2** and **3.**

The apparatus **3** may further comprise a fan **33** to blow air towards the processing area **5** and, therefore, a second air feed line **35** to the fan **33** may be provided.

Suitably, the fan **33** may be of the centrifugal type of high flow rate and high pressure type. For example, the flow rate may be of 7000 - 9000 m³/hour, while the pressure may be of 350-700 mmH₂O.

The fan **33** may be of the air curtain type. In particular, the jet of air blowing out from the same fan defines a plane substantially parallel to the axis **Z** and incident to the plane defined by the ice and / or compacted snow sheet **L.**

The angle of incidence between the two planes may be particularly reduced, for example lower than 45° and preferably lower than 30°, so as the air blowing out from the fan **33** may act between the parts **P** of the ice and / or the compact snow sheet **L** and the surface of the vehicle **V,** by promoting the detachment and / or removal from the latter.

At the same time, the air blowing out from the fan **33** may be useful to dry the surface **S** exiting from the second portal **30.**

According to a further aspect of the invention, the fan **33** may rotate around the axis **Z'.** In particular, the air curtain blowing out from the fan **33** may rotate around the axis **Z'** so as to vary the angle of incidence of the air curtain thereof on the surface **S** of the vehicle **V.**

The second feed line **35** may further comprise preheating means **38** of the air, for example one or more heat exchangers fed with the same burner of the first preheating means **22,** in order to further improve the efficacy of removal of the parts **P** of the ice and / or compacted snow sheet **L** from the vehicle and / or the drying of the surface **S.**

The second portal structure **30** may be arranged in a spatial relationship with the first portal structure **10** such that the air blowing out from the fan **33** acts upon the vehicle after the working liquid at pressure flowing out from the nozzles **20.**

Therefore, in particular, the second portal structure **30** may be arranged along the reciprocal advancement direction **d** placed downstream with respect to the first portal structure **10** and at a predetermined distance from the latter, for example of 1 - 2 meters.

According to another aspect of the invention, the second portal structure **30** may be integrally coupled to the first portal structure **10,** for example by means of a crossbeam **15.** In this way, the upper portions **11, 31** of the portal structures **10, 30** may move vertically in an integral manner. In case of an automatically movable apparatus, only the first motor means **14,** the first sensor means **26** and the first logic data processing unit **27** are sufficient to make the both moving.

The ice and / or compacted snow sheet **L** may be susceptible to undergo firstly the action of water **W** at pressure flowing out from the nozzles **20** for the fractionation of the sheet **L** thereof and, then, the action of the air at pressure blowing out from the fan **33** for the removal of the plurality of parts **P** of the ice and / or compacted snow sheet **L.**

According to a further aspect of the invention, the apparatus **4** for the removal of any accumulation of fresh snow **A** on the sheet **L** may comprise a third portal structure **40,** shown in FIG. 5. In particular, the latter portal structure **40** may be placed at a predetermined distance from the first portal structure **10** and upstream thereto.

The third portal structure **40** may have a configuration similar to both the first and the second portal structure **10, 30.** In particular, it may have a third upper portion **41,** for example a crossbeam, placed along an axis **Z"** substantially parallel to the processing area **5.** A pair of substantially vertical columns **45** may further be provided.

Moreover, the third portal structure **40** may comprise at least one blade element **42** placed on the third upper portion **41.**

In particular, the blade element **42** may come in contact with the accumulation of snow **A** overlying the ice and / or compacted snow sheet **L** for the removal of the former from the surface of the latter.

In practice, the blade element **42** "uncovers" the ice and / or compacted snow sheet **L** that is subsequently worked by the portal structures **10, 30.**

To the object, the third upper portion **41** may have a predetermined distance from the vehicle **V** so as the blade element **42** does not come in contact with the vehicle **V** thereof. In particular, such a distance determines the height of the ice and / or compacted snow sheet **L.**

To adapt to the dimensions of the vehicles **V**, the third upper portion **41** may slide along an axis **Y"** substantially parallel to the axis **Y, Y',** to vary the height between the upper portion **41** thereof and the processing area **5.** Advantageously, in this way, also the third upper portion **41** may adapt to the different heights of different types of vehicles **V.**

As for the two portal structures **10, 30,** the variation in height may be accomplished manually or automatically.

In the latter case, third sensor means **46** may be provided to detect the position and / or the height of the vehicle **V** and third motor means **44** may be provided to act upon the upper portion **41** to move thereof.

Suitably, a third logic data processing unit **47** may be provided operatively connected to the second sensor means **46** and the second motor means **44.** The latter may automatically control the action of the motor means **44** in response to a signal of the sensor means **46.**

Thanks to such a feature, the third upper portion **41** of the third portal structure **40** may automatically vary the minimum height **h** to adapt to different types of vehicle **V.**

According to another aspect of the invention, the third logic data processing unit **47** may be reciprocally operatively connected to the first and / or to the second logic data processing unit **27, 37** to cooperate, so as the variation in height of the first portal structure **10** corresponds to a variation in height of the third portal structure **40** and vice versa.

The portal structures **10, 30, 40,** and in particular the first, second and third upper portion **11, 31, 41** thereof, may automatically vary the minimum height **h** thereof from the processing area **5** to adapt to the different heights of the different types of vehicles **V.**

In a further aspect of the invention, a single data processing unit may be provided to control the movement of the apparatuses **2, 3** and **4.**

According to a further aspect of the invention, the apparatus **4** may comprise unloading means towards the exterior of the accumulation of snow **A** removed by the blade element **42.**

For example, such unloading means may include one or more milling machines with rotary movement apt to convey the removed snow **A** towards a turbine **43** arranged on the upper portion **41** of the third portal structure **40,** so as to remove at least partially the snow removed by the blade element **42** from the upper surface **S** of the vehicle **V.**

According to a particular embodiment, the third portal structure **40,** the first portal structure **10** and the second portal structure **30** may be arranged in sequence along the reciprocal advancement line **d.**

Therefore, operatively, the ice and / or compacted snow sheet **L** on the upper surface **S** of the vehicle **V** may be susceptible to interact firstly with the blade element **42** of the third portal structure **40** so as to perform the removal of the accumulation **A** of snow overlying the ice and / or compacted snow sheet **L,** then, with the water **W** at pressure flowing out from the nozzles **20** of the first portal structure **10** so as to fractionate the sheet **L** thereof into a plurality of parts **P** and, finally, with the air blowing out from the fan **33** for the removal of the plurality of fractionated parts **P** from the upper surface **S** of the vehicle **V** and / or the drying of the latter.

According to a different embodiment, not shown in the figures, the system **1** may comprise guiding means, for example rails, to allow the sliding along the advancement direction **d** of the first portal structure **10.**

In this way, it is possible to place the first portal structure **10** on the processing area **5** in any position.

Furthermore, according to such a different embodiment, also the second portal structure **30** may slidably move along the advancement direction **d** by means of guiding means so as to vary the distance between the first and the second portal structure **10, 30.**

In case the latter are integrally coupled, they may move integrally therebetween along the reciprocal advancement direction **d.**

According to another embodiment the third portal structure **40** may slide along the reciprocal advancement direction **d** by means of the guiding means so as to predetermine the distance of the latter from the first and from the second portal structure **10, 30.**

As described above, the reciprocal advancement direction **d** may be defined by the advancement of the vehicle **V** towards the portal structures **40, 10, 30** or, vice versa, by the advancement of the portal structures **40, 10, 30** towards the vehicle **V** in case the latter is fixed, without departing from the scope of protection of the present invention.

In particular, when the third, first and second portal structure **40, 10, 30** are fixed with respect to the processing area **5,** the reciprocal advancement direction **d** may be defined by the advancement of the vehicle **V,** respectively, towards the third, the first and the second portal structures **40, 10, 30.**

When the third, the first and the second portal structure **40, 10, 30** are movable, that is, they may slide by means of guiding means along the processing area **5,** the reciprocal advancement direction **d** may be defined by the advancement of the portal structures **40, 10, 30** thereof towards the vehicle **V** to be worked, both if it is fixed with respect to the processing area **5** and if the vehicle thereof is movable in the opposite direction.

Advantageously, as a result of the action of the second portal structure **30** a step of application on the surface **S** of the vehicle **V** of ecologically tested antifreeze products may be provided, so as to lower the freezing point of the water.

To the object, in a portion of the processing area **5** suitable application means may be provided, for example a series of nozzles suitable to spray such antifreeze products.

From the above description, it is evident that the invention fulfils the intended objects.

The invention is susceptible of numerous modifications and variations. All the details may be replaced with other technically equivalent elements, and the materials may be different according to requirements, without departing from the scope of protection of the invention defined by the appended claims.

## Claims

1. An apparatus for the removal of an ice and / or compacted snow sheet (**L**) from the outer surface of a vehicle (**V**) by the spray of a working liquid (**W**) at high pressure apt to fractionate the sheet (**L**) into a plurality of parts (**P**), the apparatus comprising:
- at least one processing area (**5**) susceptible to be occupied by the vehicle (**V**) to be worked;
- at least one first portal structure (**10**) overlying said at least one processing area (**5**);
- a plurality of high pressure nozzles (**20**) mounted on said at least one portal structure (**10**) to spray the working liquid (**W**) towards said at least one processing area (**5**);
- at least one feed line (**21**) of said working liquid (**W**) to said high pressure nozzles (**20**);
**characterized in that** said at least one feed line (**21**) including a high pressure pump (**28**) susceptible to feed the working liquid (**W**) to said nozzles (**20**) at a working pressure of at least 150 bar; and
**in that** said nozzles (**20**) are mounted movable on said at least one first portal structure (**10**) so as the nozzles (**20**) thereof move with respect to the latter.

2. Apparatus according to claim 1, wherein said at least one processing area (**5**) defines an advancement direction (**d**) relative between said at least one first portal structure (**10**) and the vehicle (**V**) to be worked.

3. Apparatus according to the preceding claim, wherein said nozzles (**20**) move transversely with respect to said advancement direction (**d**).

4. Apparatus according to claim 1, 2 or 3, wherein said at least one first portal structure (**10**) has a first upper portion (**11**) having a minimum height (**h**) from said at least one processing area (**5**) such as to allow the passage of the vehicle (**V**) below it.

5. Apparatus according to claim 1, 2, 3 or 4, wherein said feed line (**21**) comprises at least one manifold (**23**) mounted on said at least one first portal structure (**10**), said plurality of nozzles (**20**) being operatively connected to said at least one manifold (**23**).

6. Apparatus according to the preceding claim, wherein said at least one manifold (23) is mounted on said first upper portion (**11**) of said at least one first portal structure (**10**).

7. Apparatus according to claim 5 or 6, wherein said at least one manifold (**23**) is slidably mounted on said first upper portion (**11**) of said at least one portal structure (**10**) so as said nozzles (**20**) move along a first axis (**Z**) transverse to said advancement direction (**d**).

8. Apparatus according to claim 5, 6 or 7, wherein the nozzles (**20**) of said at least one manifold (**23**) are associated therebetween in pairs of nozzles (**24**) arranged side by side along said first axis (**Z**), each nozzle (**20**) defining a respective second and third axis (**X', X"**), the nozzles of each pair (**24**) being reciprocally coupled to each other so as the respective second and third axis (**X', X"**) lie on a plane (**π**) substantially perpendicular to said first axis (**Z**).

9. Apparatus according to the preceding claim, wherein said second and third axis (**X', X"**) of the nozzles of each pair (**24**) are reciprocally inclined at an angle of 10° to 45°.

10. Apparatus according to one or more of claims 1 to 6, wherein said nozzles (**20**) are rotationally mounted on said first upper portion (**11**) of said at least one portal structure (**10**) so as to rotate with respect to the latter.

11. Apparatus according to the preceding claim, wherein the rotation of said nozzles (**20**) is of the angular oscillating type with a predetermined amplitude (**β**).

12. Apparatus according to the preceding claim, wherein each of said nozzles (**20**) is pivoted on said first upper portion (**11**) of said at least one portal structure (**10**) and operatively connected to a connecting rod-crank mechanism (**234**), so as to oscillate around the pivoting point (**237**).

13. A system for the removal of an ice and / or compacted snow sheet (**L**) from the outer surface of a vehicle (**V**) by the spray of a working liquid (**W**) at high pressure and a subsequent blowing of a flow of air, the system comprising:
- at least one processing area (**5**) susceptible to be occupied by the vehicle (**V**) to be worked;
- a first apparatus (**2**) for the fractionation of the ice and / or compacted snow sheet (**L**) into a plurality of parts (**P**) according to one or more of the preceding claims;
- a second apparatus (**3**) for the removal of the parts (**P**) of ice and / or compacted snow from the outer surface of the vehicle (**V**);
wherein said second apparatus (**3**) comprises:
- at least one second portal structure (**30**) overlying said at least one processing area (**5**);
- at least one fan (**33**) mounted on said at least one second portal structure (**30**) to blow the flow of air towards said at least one processing area (**5**);
- at least one second air feed line (**35**) towards said at least one fan (**33**);
wherein said at least one second portal structure (**30**) is in a spatial relationship with said at least one first portal structure (**10**) such that the flow of air blowing out from said at least one fan (**33**) acts upon the vehicle (**V**) subsequently to the working liquid (**W**) at pressure flowing out from said nozzles (**20**).

14. A method for the removal of an ice and / or compacted snow sheet (**L**) from the outer surface of a vehicle (**V**), comprising the steps of:
- providing for the vehicle (**V**) to be worked in at least one processing area (**5**);
- spraying on the outer surface of the vehicle (**V**) of a working liquid (**W**) to fractionate the ice and / or compacted snow sheet (**L**) into a plurality of parts (**P**);
**characterized in that** said spraying step is accomplished at a working pressure of at least 150 bars; and further
**characterized by** comprising:
- blowing of a flow of air on the outer surface of the vehicle (**V**) for the removal of the parts (**P**) of ice and / or compacted snow from the outer surface of the vehicle (**V**);
wherein said step of blowing is accomplished after said step of spraying;
wherein said step of spraying is accomplished by means of a plurality of nozzles (**20**) at high pressure mounted on at least one portal structure (**10**) to spray the working liquid (**W**) towards said at least one processing area (**5**), said step of blowing being accomplished by means of at least one fan (**33**) mounted on at least one second portal structure (**30**) to blow the flow of air towards said at least one processing area (**5**).

## Patentansprüche

1. Vorrichtung zum Entfernen einer Eis- und/oder Pressschneeschicht (L) von der äußeren Fläche eines Fahrzeugs (V) durch das Sprühen einer Arbeitsflüssigkeit (W) bei hohem Druck, geeignet, um die Schicht (L) in mehrere Teile (P) zu fraktionieren, wobei die Vorrichtung Folgendes umfasst:
- mindestens einen Bearbeitungsbereich (5), der durch das zu bearbeitende Fahrzeug (V) belegt werden kann;
- mindestens eine erste Torstruktur (10), die den mindestens einen Bearbeitungsbereich (5) überlagert;
- mehrere Hochdruckdüsen (20), die auf der mindestens einen Torstruktur (10) montiert sind, um die Arbeitsflüssigkeit (W) hin zu dem mindestens einen Bearbeitungsbereich (5) zu sprühen;
- mindestens eine Zuleitung (21) der Arbeitsflüssigkeit (W) zu den Hochdruckdüsen (20) ;
**dadurch gekennzeichnet, dass** die mindestens eine Zuleitung (21) eine Hochdruckpumpe (28) aufweist, die die Arbeitsflüssigkeit (W) zu den Düsen (20) bei einem Arbeitsdruck von mindestens 150 bar zuführen kann; und dadurch, dass die Düsen (20) bewegbar auf der mindestens einen ersten Torstruktur (10) montiert sind, um die Düsen (20) davon in Bezug auf die letztere zu bewegen.

2. Vorrichtung nach Anspruch 1, wobei der mindestens eine Bearbeitungsbereich (5) eine Vorrückrichtung (d) relativ zwischen der mindestens einen ersten Torstruktur (10) und dem zu bearbeitenden Fahrzeug (V) definiert.

3. Vorrichtung nach dem vorhergehenden Anspruch, wobei sich die Düsen (20) quer in Bezug auf die Vorrückrichtung (d) bewegen.

4. Vorrichtung nach Anspruch 1, 2 oder 3, wobei die mindestens eine erste Torstruktur (10) einen ersten oberen Abschnitt (11) mit einer Mindesthöhe (h) von dem mindestens einen Bearbeitungsbereich (5) aufweist, um die Durchfahrt des Fahrzeugs (V) darunter zu ermöglichen.

5. Vorrichtung nach Anspruch 1, 2, 3 oder 4, wobei die Zuleitung (21) mindestens einen Verteiler (23) umfasst, der auf der mindestens einen ersten Torstruktur (10) montiert ist, wobei die mehreren Düsen (20) mit dem mindestens einen Verteiler (23) wirkverbunden sind.

6. Vorrichtung nach dem vorhergehenden Anspruch, wobei der mindestens eine Verteiler (23) auf dem ersten oberen Abschnitt (11) der mindestens einen ersten Torstruktur (10) montiert ist.

7. Vorrichtung nach Anspruch 5 oder 6, wobei der mindestens eine Verteiler (23) verschiebbar auf dem ersten oberen Abschnitt (11) der mindestens einen Torstruktur (10) montiert ist, um die Düsen (20) entlang einer ersten Achse (Z) quer zu der Vorrückrichtung (d) zu bewegen.

8. Vorrichtung nach Anspruch 5, 6 oder 7, wobei die Düsen (20) des mindestens einen Verteilers (23) dazwischen in Paaren von Düsen (24) zugeordnet sind, die nebeneinander entlang der ersten Achse (Z) angeordnet sind, wobei jede Düse (20) eine jeweilige zweite und dritte Achse (X', X") definiert, wobei die Düsen von jedem Paar (24) hin- und herbeweglich miteinander gekoppelt sind, sodass die jeweilige zweite und dritte Achse (X', X") auf einer Ebene (π) im Wesentlichen senkrecht zu der ersten Achse (Z) liegen.

9. Vorrichtung nach dem vorhergehenden Anspruch, wobei die zweite und dritte Achse (X', X") der Düsen jedes Paares (24) hin- und herbeweglich in einem Winkel von 10° bis 45° geneigt sind.

10. Vorrichtung nach einem oder mehreren der Ansprüche 1 bis 6, wobei die Düsen (20) drehbar auf dem ersten oberen Abschnitt (11) der mindestens einen Torstruktur (10) montiert sind, um sich in Bezug auf die letztere zu drehen.

11. Vorrichtung nach dem vorhergehenden Anspruch, wobei die Drehung der Düsen (20) vom Winkelschwingungstyp mit einer vorbestimmten Amplitude (β) ist.

12. Vorrichtung nach dem vorhergehenden Anspruch, wobei jede der Düsen (20) auf dem ersten oberen Abschnitt (11) der mindestens einen Torstruktur (10) geschwenkt wird und mit einem Pleuelstange-Kurbelmechanismus (234) wirkverbunden ist, um um den Schwenkpunkt (237) zu schwingen.

13. System zum Entfernen einer Eis- und/oder Pressschneeschicht (L) von der äußeren Fläche eines Fahrzeugs (V) durch das Sprühen einer Arbeitsflüssigkeit (W) bei hohem Druck und ein nachfolgendes Blasen eines Luftstroms, wobei das System Folgendes umfasst:
- mindestens einen Bearbeitungsbereich (5), der durch das zu bearbeitende Fahrzeug (V) belegt sein kann;
- eine erste Vorrichtung (2) zum Fraktionieren der Eis- und/oder Pressschneeschicht (L) in mehrere Teile (P) nach einem oder mehreren der vorhergehenden Ansprüche;
- eine zweite Vorrichtung (3) zum Entfernen der Teile (P) aus Eis und/oder Pressschnee von der äußeren Fläche des Fahrzeugs (V);
wobei die zweite Vorrichtung (3) Folgendes umfasst:
- mindestens eine zweite Torstruktur (30), die den mindestens einen Bearbeitungsbereich (5) überlagert;
- mindestens ein Gebläse (33), das auf der mindestens einen zweiten Torstruktur (30) montiert ist, um den Luftstrom hin zu dem mindestens einen Bearbeitungsbereich (5) zu blasen;
- mindestens eine zweite Luftzuleitung (35) hin zu dem mindestens einen Gebläse (33);
wobei die mindestens eine zweite Torstruktur (30) in einer räumlichen Beziehung mit der mindestens einen ersten Torstruktur (10) steht, sodass der Luftstrom, der aus dem mindestens einen Gebläse (33) geblasen wird, auf das Fahrzeug (V) wirkt, nachfolgend auf die Arbeitsflüssigkeit (W) bei Druck, die aus den Düsen (20) strömt.

14. Verfahren zum Entfernen einer Eis- und/oder Pressschneeschicht (L) von der äußeren Fläche eines Fahrzeugs (V), umfassend die Schritte zum:
- Bereitstellen des zu bearbeitenden Fahrzeugs (V) in mindestens einem Bearbeitungsbereich (5);
- Sprühen einer Arbeitsflüssigkeit (W) auf die äußere Fläche des Fahrzeugs (V), um die Eis- und/oder Pressschneeschicht (L) in mehrere Teile (P) zu fraktionieren;
**dadurch gekennzeichnet, dass** der Sprühschritt bei einem Arbeitsdruck von mindestens 150 bar erfolgt, und ferner
**dadurch gekennzeichnet, dass** es Folgendes umfasst:
- Blasen eines Luftstroms auf die äußere Fläche des Fahrzeugs (V) zum Entfernen der Teile (P) aus Eis und/oder Pressschnee von der äußeren Fläche des Fahrzeugs (V);
wobei der Schritt zum Blasen nach dem Schritt zum Sprühen erfolgt;
wobei der Schritt zum Sprühen mittels mehrerer Düsen (20) bei hohem Druck, die auf mindestens einer Torstruktur (10) montiert sind, erfolgt, um die Arbeitsflüssigkeit (W) hin zu dem mindestens einen Bearbeitungsbereich (5) zu sprühen, wobei der Schritt zum Blasen mittels mindestens eines Gebläses (33) erfolgt, das auf mindestens einer zweiten Torstruktur (30) montiert ist, um den Luftstrom hin zu dem mindestens einen Bearbeitungsbereich (5) zu blasen.

## Revendications

1. Appareil pour l'élimination d'une feuille de glace et/ou de neige compactée (L) de la surface externe d'un véhicule (V) par la pulvérisation d'un liquide de traitement (W) à haute pression apte à fractionner la feuille (L) en une pluralité de parties (P), l'appareil comprenant :
- au moins une zone de traitement (5) susceptible d'être occupée par le véhicule (V) à traiter ;
- au moins une première structure de portique (10) recouvrant ladite au moins une zone de traitement (5) ;
- une pluralité de buses haute pression (20) montées sur ladite au moins une structure de portique (10) pour pulvériser le liquide de traitement (W) vers ladite au moins une zone de traitement (5) ;
- au moins une ligne d'alimentation (21) desdites buses haute pression (20) en ledit liquide de traitement (W) ;
**caractérisé en ce que** ladite au moins une ligne d'alimentation (21) inclut une pompe haute pression (28) susceptible d'alimenter lesdites buses (20) en liquide de traitement (W) à une pression de traitement d'au moins 150 bar ; et
**en ce que** lesdites buses (20) sont montées mobiles sur ladite au moins une première structure de portique (10) de sorte que les buses (20) de celle-ci se déplacent par rapport à cette dernière.

2. Appareil selon la revendication 1, dans lequel ladite au moins une zone de traitement (5) définit une direction d'avancement (d) relative entre ladite au moins une première structure de portique (10) et le véhicule (V) à traiter.

3. Appareil selon la revendication précédente, dans lequel lesdites buses (20) se déplacent transversalement par rapport à ladite direction d'avancement (d).

4. Appareil selon la revendication 1, 2 ou 3, dans lequel ladite au moins une première structure de portique (10) comporte une première portion supérieure (11) ayant une hauteur minimale (h) à partir de ladite au moins une zone de traitement (5) de manière à permettre le passage du véhicule (V) en dessous.

5. Appareil selon la revendication 1, 2, 3 ou 4, dans lequel ladite ligne d'alimentation (21) comprend au moins un collecteur (23) monté sur ladite au moins une première structure de portique (10), ladite pluralité de buses (20) étant raccordées opérationnellement audit au moins un collecteur (23).

6. Appareil selon la revendication précédente, dans lequel ledit au moins un collecteur (23) est monté sur ladite première portion supérieure (11) de ladite au moins une première structure de portique (10).

7. Appareil selon la revendication 5 ou 6, dans lequel ledit au moins un collecteur (23) est monté en coulissement sur ladite première portion supérieure (11) de ladite au moins une structure de portique (10) de sorte que lesdites buses (20) se déplacent le long d'un premier axe (Z) transversal à ladite direction d'avancement (d).

8. Appareil selon la revendication 5, 6 ou 7, dans lequel les buses (20) dudit au moins un collecteur (23) sont associées entre elles en paires de buses (24) agencées côte à côte le long dudit premier axe (Z), chaque buse (20) définissant un deuxième et un troisième axe (X', X") respectifs, les buses de chaque paire (24) étant réciproquement couplées les unes aux autres de sorte que le deuxième et le troisième axe (X', X") respectifs se trouvent sur un plan (π) sensiblement perpendiculaire audit premier axe (Z).

9. Appareil selon la revendication précédente, dans lequel ledit deuxième et ledit troisième axe (X', X") des buses de chaque paire (24) sont réciproquement inclinés selon un angle de 10° à 45°.

10. Appareil selon une ou plusieurs des revendications 1 à 6, dans lequel lesdites buses (20) sont montées en rotation sur ladite première portion supérieure (11) de ladite au moins une structure de portique (10) de manière à tourner par rapport à cette dernière.

11. Appareil selon la revendication précédente, dans lequel la rotation desdites buses (20) est de type oscillant angulaire avec une amplitude (β) prédéterminée.

12. Appareil selon la revendication précédente, dans lequel chacune desdites buses (20) est pivotée sur ladite première portion supérieure (11) de ladite au moins une structure de portique (10) et raccordée opérationnellement à un mécanisme de bielle-manivelle (234), de manière à osciller autour du point pivotant (237).

13. Système pour l'élimination d'une feuille de glace et/ou de neige compactée (L) de la surface externe d'un véhicule (V) par la pulvérisation d'un liquide de traitement (W) à haute pression et le soufflage ultérieur d'un flux d'air, le système comprenant :
- au moins une zone de traitement (5) susceptible d'être occupée par le véhicule (V) à traiter ;
- un premier appareil (2) pour le fractionnement de la feuille de glace et/ou de neige compactée (L) en une pluralité de parties (P) selon une ou plusieurs des revendications précédentes ;
- un second appareil (3) pour l'élimination des parties (P) de glace et/ou de neige compactée de la surface externe du véhicule (V) ;
dans lequel ledit second appareil (3) comprend :
- au moins une seconde structure de portique (30) recouvrant ladite au moins une zone de traitement (5) ;
- au moins un ventilateur (33) monté sur ladite au moins une seconde structure de portique (30) pour souffler l'flux d'air vers ladite au moins une zone de traitement (5) ;
- au moins une seconde ligne d'alimentation en air (35) vers ledit au moins un ventilateur (33) ;
dans lequel ladite au moins une seconde structure de portique (30) est dans une relation spatiale avec ladite au moins une première structure de portique (10) de telle sorte que l'flux d'air soufflant depuis ledit au moins un ventilateur (33) agit sur le véhicule (V) ultérieurement au liquide de traitement (W) à une pression s'écoulant desdites buses (20).

14. Procédé pour l'élimination d'une feuille de glace et/ou de neige compactée (L) de la surface externe d'un véhicule (V), comprenant les étapes de :
- fourniture du véhicule (V) à traiter dans au moins une zone de traitement (5) ;
- pulvérisation sur la surface externe du véhicule (V) d'un liquide de traitement (W) pour fractionner la feuille de glace et/ou de neige compactée (L) en une pluralité de parties (P) ;
**caractérisé en ce que** ladite étape de pulvérisation est accomplie à une pression de traitement d'au moins 150 bar ; et en outre
**caractérisé en ce qu'**il comprend :
- le soufflage d'un flux d'air sur la surface externe du véhicule (V) pour l'élimination des parties (P) de glace et/ou de neige compactée de la surface externe du véhicule (V) ;
dans lequel ladite étape de soufflage est accomplie après ladite étape de pulvérisation ;
dans lequel ladite étape de pulvérisation est accomplie au moyen d'une pluralité de buses (20) à haute pression montées sur au moins une structure de portique (10) pour pulvériser le liquide de traitement (W) vers ladite au moins une zone de traitement (5), ladite étape de soufflage étant accomplie au moyen d'au moins un ventilateur (33) monté sur au moins une seconde structure de portique (30) pour souffler le flux d'air vers ladite au moins une zone de traitement (5).
